# EUROPÄISCHE PATENTSCHRIFT

(11) **EP 3 470 258 B1**
(45) Veröffentlichungstag und Bekanntmachung des Hinweises auf die Patenterteilung: **16.06.2021**
(21) Anmeldenummer: 18197823.0
(22) Anmeldetag: 01.10.2018
(51) Int. Cl.: B60L 53/31, B60L 53/14, H02G 7/05, B60L 53/30, E04H 6/02, B60L 53/35

(54) **VORRICHTUNG ZUM LADEN VON KRAFTFAHRZEUGEN**
DEVICE FOR CHARGING MOTOR VEHICLES
DISPOSITIF DE CHARGEMENT DE VÉHICULES AUTOMOBILES

(30) Priorität: 13.10.2017 DE 102017123899
(43) Veröffentlichungstag der Anmeldung: 17.04.2019
(73) Patentinhaber: MAN Truck & Bus SE, 80995 München (DE)
(72) Erfinder: Schönherr, Stephan, 86153 Augsburg (DE); Vanicek, Thomas, 80797 München (DE)
(74) Vertreter: v. Bezold & Partner Patentanwälte - PartG mbB

(56) Entgegenhaltungen:
- EP-A2- 2 551 145
- CN-A- 105 162 218
- CN-A- 106 671 820
- CN-U- 203 135 535
- DE-A1-102016 209 192
- US-A1- 2014 354 229
- Stuart Jones: "Electric dreams become reality - Bus & Coach Buyer", , 5. September 2017 (2017-09-05), XP055553948, Gefunden im Internet: URL:https://www.busandcoachbuyer.com/elect ric-dreams-become-reality/ [gefunden am 2019-02-08]
- Teslarati Network: "Retractable Tesla UMC Roof Mount", , 22. November 2014 (2014-11-22), XP055564852, Gefunden im Internet: URL:https://www.teslarati.com/retractable- tesla-umc-roof-mount/ [gefunden am 2019-03-05]

## Beschreibung

Die vorliegende Erfindung betrifft eine Vorrichtung zum Laden von Kraftfahrzeugen. Insbesondere betrifft die Erfindung, ohne darauf beschränkt zu sein, eine Anordnung und eine Orientierung mehrerer Ladestellen.

Herkömmliche Ladestellen, beispielsweise freistehende Ladesäulen und an einer Garagenwand montierbare Ladekonsolen, umfassen jeweils ein Ladekabel, über das ein neben der Ladestelle abgestelltes Fahrzeug mit elektrischer Energie geladen werden kann. Beispielsweise beschreibt das Dokument DE 10 2011 080 455 A1 eine Ladesäule mit Ladekabel und Steckverbindungen zwischen Ladekabel und Fahrzeug.

Solche herkömmlichen Ladestellen sind zum Beladen einzelner Fahrzeuge am Straßenrand oder in einer Einzelplatzgarage geeignet. Jedoch nimmt der Installationsaufwand zum Aufladen eines großen Fuhrparks, beispielsweise mit elektrisch angetriebenen Bussen für den städtischen Nahverkehr oder Lastkraftwagen (LKW) für den Fernverkehr, unverhältnismäßig mit der Anzahl der aufzuladenden Fahrzeuge zu. Zudem führt eine starre Zuordnung zwischen Ladestelle und Einzelparkfläche zu einer ineffizienten Nutzung der vorhandenen Ladestellen und der Standfläche, beispielsweise auf einem Betriebshof eines Nahverkehrsbetreibers oder einer LKW-Parkbucht, da die aufzuladenden Fahrzeuge unterschiedliche Fahrzeuglängen aufweisen und die Ladebuchsen an den aufzuladenden Fahrzeugen uneinheitlich positioniert sind.

Das Dokument CN 186 671 828 A beschreibt eine Ladestelle mit vier Auslässen mit jeweils einem Ladekabel, welche an der Ecke von vier paarweise aneinandergrenzenden Parkplätzen am Boden montiert ist und ein Ladekontrollsystem umfasst, welches aufeinanderfolgende Ladevorgänge angeschlossener Personenkraftwagen derart überwacht, dass zu jedem Zeitpunkt nur ein Fahrzeug geladen wird, wobei die Reihenfolge der einzelnen Ladevorgänge von der Dringlichkeit basierend auf der in der Reservierung angegebenen geplanten Parkdauer abhängt.

Der am 5. September 2017 online veröffentlichte Artikel "Electric dreams become reality - Bus & Coach Buyer" von Stuart Jones beschreibt den Ausbau einer elektrischen Busflotte für den öffentlichen Nahverkehr in Großstädten, wobei ein Verhältnis von 1:1.9 zwischen Bussen und Ladepunkten an Sammelladeplätzen angestrebt wird. Zur Gewinnung der Ladeenergie sind Solardächer an Sammelladeplätzen vorgesehen, welche überschüssige erzeugte Energie in das öffentliche Stromnetz einspeisen.

Das Dokument US 2014/0354229 A1 beschreibt eine Fahrzeugladestation mit einer Spur, die sich über mehrere Fahrzeugparkplätze erstreckt, und eine bewegliche Ladevorrichtung, die von der Spur getragen wird. Die bewegliche Ladevorrichtung umfasst eine Basis, die verschiebbar mit der Schiene gekoppelt ist, ein mechanisch mit der Basis kommunizierendes Greiforgan, das ausgebildet ist, mit einem Elektrofahrzeug, das in einem der mehreren Fahrzeugparkplätze angeordnet ist, elektrisch zu koppeln, und eine Stromversorgungsschaltung zum Empfang einer elektrischen Ladung von einer Stromquelle und zur steuerbaren Bereitstellung der elektrischen Ladung für das Elektrofahrzeug.

Ferner ist es schwierig, bei einer Eins-zu-Eins-Zuordnung zwischen Ladestelle und Einzelparkfläche jede Einzelparkfläche an Zufahrtswege und Abfahrtswege der Standfläche anzubinden. Eine intensive An- und Abfahrt eines Großteils der Fahrzeuge, beispielsweise bei einem Schichtwechsel, ist dadurch mit langen Warte- und Rangierzeiten verbunden, die einen Verlust an Ladezeit bedeuten.

Somit ist eine Aufgabe der Erfindung, eine kostengünstig installierbare Technik zum Aufladen einer Vielzahl elektrisch angetriebener Fahrzeuge bereitzustellen. Eine weitere oder alternative Aufgabe der Erfindung ist, auf einer gegebenen Standfläche eine möglichst große Anzahl unterschiedlicher Fahrzeuge aufzuladen. Eine weitere oder alternative Aufgabe der Erfindung ist, Zu- und Abfahrtszeiten der aufzuladenden Fahrzeuge zu reduzieren.

Diese Aufgabe oder Aufgaben werden durch eine Vorrichtung zum Laden elektrisch antreibbarer Fahrzeuge mit den Merkmalen des Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem Aspekt umfasst die Vorrichtung mehrere Ladestellen, die jeweils drei oder vier Auslässe mit jeweils einem Ladekabel zur Bereitstellung eines Ladestroms an ein elektrisch antreibbares Fahrzeug umfassen. Die drei oder vier Auslässe sind in drei bzw. vier die Ladestelle umlaufenden Sektoren angeordnet. Jeder Sektor ist mit einem Winkel von 30° bis 60°, vorzugsweise 45°, zu einem zwischen mehreren Ladestellen geradlinig verlaufenden Anfahrtsweg ausgerichtet.

Da jede Ladestelle jeweils drei bzw. vier Sektoren zum Laden jeweils eines Fahrzeugs bereitstellt, kann mit einem Bruchteil des herkömmlichen Installationsaufwands eine Vielzahl an Fahrzeugen geladen werden. Indem die drei bzw. vier Sektoren um jede Ladestelle nicht senkrecht sondern diagonal, d.h. mit einem Winkel zwischen 30° und 60°, beispielsweise 45°, zum Anfahrtsweg ausgerichtet sind, können je drei oder zwei benachbarte Sektoren derselben Ladestelle jeweils einen gemeinsamen Anfahrtsweg schneiden. Dadurch kann die Anzahl der Anfahrtswege je Lademöglichkeit, d.h. je Auslass, gegenüber herkömmlichen Ladestellen mindestens halbiert werden. Indem die Anfahrtswege weithin geradlinig zwischen den mehreren Ladestellen verlaufen, entfällt ein insbesondere bei großen Nutzfahrzeugen zeitaufwändiges Rangieren der zu ladenden Fahrzeuge.

Die drei bzw. vier Auslässe können an jeder Ladestelle umlaufend gleichverteilt angeordnet sein. Bei drei Auslässen je Ladestelle können die Auslässe in einer Draufsicht jeweils unter einem Winkel von 120° zueinander stehen. Jeder Sektor kann einem horizontalen Winkel (auch: Öffnungswinkel oder Zugangswinkel) von 120° entsprechen, beispielsweise +60° und -60° in einer horizontalen Ebene um den jeweiligen Auslass. Vier Auslässe je Ladestelle können in einer Draufsicht jeweils unter einem Winkel von 90° zueinander stehen. Jeder Sektor kann einem horizontalen Winkel (auch: Öffnungswinkel oder Zugangswinkel) von 90° entsprechen, beispielsweise +45° und -45° in einer horizontalen Ebene um den jeweiligen Auslass.

Die Ausrichtung des jeweiligen Sektors kann seiner Winkelhalbierenden und/oder einer Richtung des entsprechenden Auslasses entsprechen. DerWinkel zwischen dem Anfahrtsweg und dem Sektor kann der horizontale Winkel zwischen der Fahrtrichtung auf dem Anfahrtsweg und der Winkelhalbierenden des Sektors bzw. der Richtung des Auslasses sein.

Die mehreren Ladestellen können in einem rechtwinkligen Raster (beispielsweise einer zusammenhängenden Teilmenge eines zweidimensionalen Bravais-Gitters mit rechtwinkliger Basis, d.h. die zwei Basisvektoren sind zueinander senkrecht) angeordnet sein. Die zwischen den mehreren Ladestellen geradlinig verlaufenden Anfahrtswege können jeweils parallel zu einer Diagonalen des rechtwinkligen Rasters sein (beispielsweise parallel zur Summe oder Differenz der Basisvektoren). Jede Ladestelle kann 4 Auslässe umfassen. Alternativ können die mehreren Ladestellen gemäß einem hexagonalen Raster (beispielsweise einer zusammenhängenden Teilmenge eines zweidimensionalen Bravais-Gitters, dessen Basisvektoren einen Winkel von 120° einschließen) angeordnet sein. Die zwischen den mehreren Ladestellen geradlinig verlaufenden Anfahrtswege können jeweils parallel zu einer Diagonalen des rechtwinkligen Rasters sein (beispielsweise parallel zur Summe oder Differenz der zwei Basisvektoren). Jede Ladestelle kann 3 Auslässe umfassen.

Die Vorrichtung kann ferner einen oder mehrere zusammenhängende, sich horizontal erstreckende Träger umfassen. Die mehreren Ladestellen können am Träger oder an jeweils einem der Träger vertikal hängend angeordnet sein. Die Träger können sich auf einer Höhe über den Fahrzeugen erstrecken. Die Träger können an einer Vielzahl von Stützen über einer Parkfläche (beispielsweise einem Betriebshof) angeordnet sein. Die geradlinig verlaufenden Anfahrtswege können sich zwischen den Stützen erstrecken.

Die Ladestellen können entlang der Träger beweglich angeordnet sein. Hierzu können die Träger Schienen und die Ladestellen auf den Schienen gelagerte Rollen (beispielsweise eine Laufkatze mit Rollen) umfassen. Die Ladestellen können manuell gezogen oder elektrisch angetrieben längs der Träger beweglich sein.

Die Träger können Leitungen umfassen, beispielsweise Kabel und/oder Stromschienen, zur Stromversorgung der am jeweiligen Träger hängend angeordneten Ladestellen. Die Vorrichtung kann ferner eine oder mehrere Leistungselektronikeinheiten umfassen, die jeweils dazu ausgebildet sind, den Ladestrom zum Laden eines elektrischen Energiespeichers oder mehrerer elektrischer Energiespeicher eines Fahrzeugs oder mehrerer Fahrzeuge bereitzustellen. Die Leistungselektronikeinheit kann stationär angeordnet sein und über die Leitungen der Träger mit den Ladestellen am Träger zur Übertragung des Ladestroms verbunden sein.

Die Träger können modular aus Trägermodulen aufgebaut sein. Ein Satz der Trägermodule kann Trägermodule mit geradlinigen Abschnitten und Trägermodule mit gekrümmten Abschnitten umfassen. Die den Träger ausbildenden Trägermodule können jeweils entweder einen geradlinigen Abschnitt oder einen gekrümmten Abschnitt des zusammenhängenden Trägers ausbilden. Der gekrümmte Abschnitt kann ein Kreisbogensegment, beispielsweise mit 90° oder 180° des Kreissegments umfassen. Für beweglich hängende Ladestellen können die Trägermodule Weichen und/oder Kreuzungen umfassen. Die Trägermodule können jeweils mit dem in Längsrichtung oder Bewegungsrichtung benachbarten Trägermodul zusammensteckbar und/oder verschraubbar sein.

Der zusammenhängende Träger kann eine Nutzfläche zum Abstellen der zu ladenden Fahrzeuge überqueren, beispielsweise teilweise überdachen und/oder teilweise überdecken. Hierzu kann der zusammenhängende Träger (beispielsweise in einer horizontalen Ebene) mäanderförmig und/oder spiralförmig über der Nutzfläche angeordnet sein. Dadurch kann mit einer zusammenhängenden linearen (i.A. nicht geradlinigen) Struktur des Trägers die Nutzfläche vollständig und/oder flexibel zum Laden der Fahrzeuge genutzt werden. Die "Überdeckung" der Nutzfläche kann vollständig sein in dem Sinn, dass jede Stelle der Nutzfläche überdacht ist und/oder zu einem Sektor einer Ladestelle gehört. Die Überdachung mittels des Trägers oder der Träger kann Personen, die in die zu ladenden Fahrzeuge ein- oder aussteigen, einen Regenschutz bieten und/oder einen vor Niederschlag geschützten Weg zu einem an die Nutzfläche angrenzenden Gebäude bieten.

Vorzugsweise sind auf der Oberseite des Trägers oder der Träger Solarzellen angeordnet. Die Solarzellen können zur Energieversorgung der Ladestellen elektrisch angeschlossen sein. Die Solarzellen können, beispielsweise über Gleichspannungswandler und/oder stationäre elektrische Energiespeicher, mit den Ladestellen verbunden sein.

Jeder Auslass kann ferner einen Ladestecker und eine Benutzereinheit zur Ablage des Ladesteckers, eine Regelung in Kommunikation mit einem Batteriemanagementsystem im Fahrzeug zum Regeln des Ladestroms und/oder eine Benutzerschnittstelle zur Bedienung der Ladestelle umfassen. An der Benutzerschnittstelle kann eine Ladezeit eingegeben werden. Die mit der Benutzerschnittstelle in Kommunikation stehende Regelung kann den Ladestrom abhängig von der eingegebenen Ladezeit und einem vom Batteriemanagementsystem kommunizierten Maximalstrom regeln.

Ein weiterer Aspekt betrifft eine Nutzfläche zum Laden einer Vielzahl elektrisch antreibbarer Fahrzeuge. Die Nutzfläche umfasst mehrere Stützen, die in einem Raster (beispielsweise gemäß einem regelmäßigen Gitter mit sich wiederholenden Abständen) auf der Nutzfläche voneinander beabstandet angeordnet sind. Mindestens ein in sich zusammenhängender und sich horizontal erstreckender Träger liegt auf den Stützen auf. Am Träger sind mehrere Ladestellen hängend angeordnet, die jeweils drei oder vier Auslässe mit jeweils einem Ladekabel zur Bereitstellung eines Ladestroms an ein elektrisch antreibbares Fahrzeug umfassen. Die drei oder vier Auslässe sind in drei bzw. vier die Ladestelle umlaufenden Sektoren angeordnet. Jeder Sektor ist mit einem Winkel von 30° bis 60°, vorzugsweise 45°, zu einem zwischen mehreren Stützen geradlinig verlaufenden Anfahrtsweg ausgerichtet.

Die Nutzfläche kann einen Parkplatz, einen Parkhafen, einen Betriebshof, ein oder mehrere Ladetore und/oder eine Laderampe für die elektrisch antreibbaren Fahrzeuge umfassen. Der Parkhafen kann eine Nutzfläche sein, die in Parkbuchten gegliedert ist, welche jeweils mehrere Stellflächen umfassen.

Die Fahrzeuge können Nutzfahrzeuge umfassen. Die Fahrzeuge können einen Omnibus (kurz: Bus), einen Lastkraftwagen (LKW) oder eine Sattelzugmaschine umfassen. Insbesondere bei Nutzfahrzeugen können die Fahrzeuglänge und/oder die Position einer Ladebuchse, mit welcher der Ladestecker des Auslasses zum Laden verbunden wird, variieren. Die Vorrichtung ist insbesondere vorteilhaft zum Laden von Nutzfahrzeugen, da das Nutzfahrzeug entlang der geradlinig verlaufenden Anfahrtswege ohne Rangieren gefahren und zum Laden abgestellt werden kann, sobald sich die Ladebuchse des Fahrzeugs in einem der Sektoren befindet.

Vorstehend beschriebene Merkmale sind in jeder Kombination realisierbar. Weitere Merkmale und Vorteile der Erfindung werden im Folgenden unter Bezugnahme auf die beigefügten Zeichnungen beschrieben. Es zeigen:
- Figur 1: eine schematische Draufsicht eines ersten Ausführungsbeispiels einer Vorrichtung zum Laden elektrisch antreibbarer Fahrzeuge;
- Figur 2: eine schematische Draufsicht eines zweiten Ausführungsbeispiels der Ladevorrichtung;
- Figuren 3A, 3B, 3C: schematische Draufsichten beispielhafter Trägermodule, die miteinander frei kombinierbar sind; und
- Figuren 4A, 4B, 4C: schematische Draufsichten beispielhafter Verläufe eines Trägers der Ladevorrichtung, die in jedem Ausführungsbeispiel realisierbar sind.

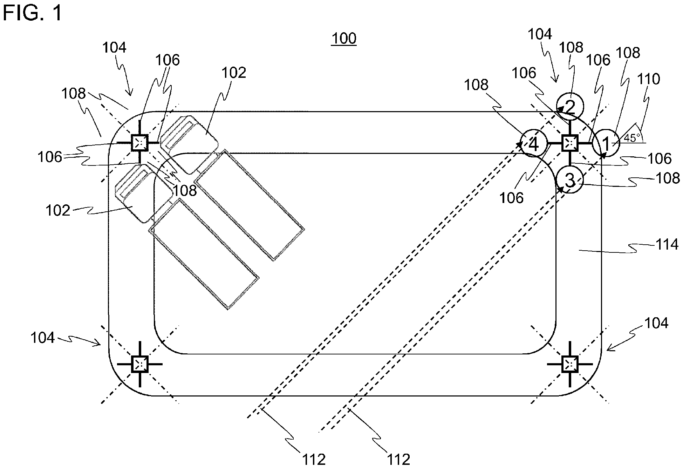

Figur 1 zeigt ein erstes Ausführungsbeispiel einer allgemein mit Bezugszeichen 100 bezeichnete Vorrichtung zum Laden elektrisch antreibbarer Fahrzeuge 102. Die Vorrichtung 100 umfasst mehrere Ladestellen 104, die jeweils dazu ausgebildet sind, mehrere Fahrzeuge 102 elektrisch zu laden. Dazu sind im ersten Ausführungsbeispiel an vier gegenüberliegenden Seiten, beispielsweise mit gleichen umlaufenden Abständen, mindestens vier Auslässe 106 an jeder Ladestelle 104 angeordnet. Jeder Auslass 106 umfasst ein Ladekabel mit einem Ladestecker zur Bereitstellung eines Ladestroms.

Jeder Auslass einer Ladestelle 104 ist in räumlicher Zuordnung zu jeweils einem von mindestens vier Sektoren 108 einer Ladestelle 104. In jedem Sektor 108 kann jeweils ein elektrisch antreibbares Fahrzeug 102 mittels des jeweiligen Auslasses 106 geladen werden. Eine Ausrichtung des Auslasses 106, beispielsweise die Mittelsenkrechte des jeweiligen Sektors 108, ist nicht senkrecht zu einem Anfahrtsweg 112. Vielmehr schließen die Fahrtrichtung auf dem Anfahrtsweg 112 und die Ausrichtung des jeweiligen Auslasses 106 oder Sektors 108 einen Winkel 110 von etwa 45° ein.

Während das in Figur 1 gezeigte erste Ausführungsbeispiel 4 Auslässe 106 je Ladestelle 104 aufweist, kann jedes Ausführungsbeispiel dahingehend variiert werden, dass jede Ladestelle beispielsweise 3 oder 6 Auslässe aufweist. Ladestellen 104 mit 4 Auslässen 106 sind vorteilhaft in einem rechteckigen (insbesondere quadratischen) Raster anordenbar. Ladestellen mit 3 oder 6 Auslässe können vorteilhaft in einem hexagonalen Raster angeordnet sein. Die Fahrtrichtung auf dem Anfahrtsweg im hexagonalen Gitter und die Ausrichtung des jeweiligen Auslasses oder Sektors kann einen Winkel von etwa 30° einschließen.

Bei jedem Ausführungsbeispiel können die Ladestellen 104 jeweils freistehend implementiert sein. Die Stromversorgung der einzelnen Ladestellen 104 kann durch Erdverkabelung realisiert sein. Alternativ oder ergänzend kann, wie in dem in Figur 1 gezeigten ersten Ausführungsbeispiel der Vorrichtung 100, die Vorrichtung 100 mindestens einen sich horizontal erstreckenden und zusammenhängenden (optional sogar in sich geschlossenen) Träger 114 umfassen. Der Träger 114 kann als partielle Überdachung und/oder zur oberirdischen Verkabelung der einzelnen Ladestellen 104 dienen. In einer ersten Variante sind die Ladestellen 104 zugleich Stützen des Trägers 114. In einer zweiten Variante, die mit der ersten Variante kombinierbar ist, ist mindestens eine Ladestelle 104 entlang dem Träger 114 längsbeweglich, beispielsweise am Träger 114 hängend, angeordnet. Die Ladestellen 104 können so zwischen mehreren Positionen längsbeweglich sein, an denen jeweils die vorteilhafte Ausrichtung von 45° (bzw. 30°) der Auslässe 106 oder Sektoren 108 bezüglich der Anfahrtswege 112 erfüllt ist.

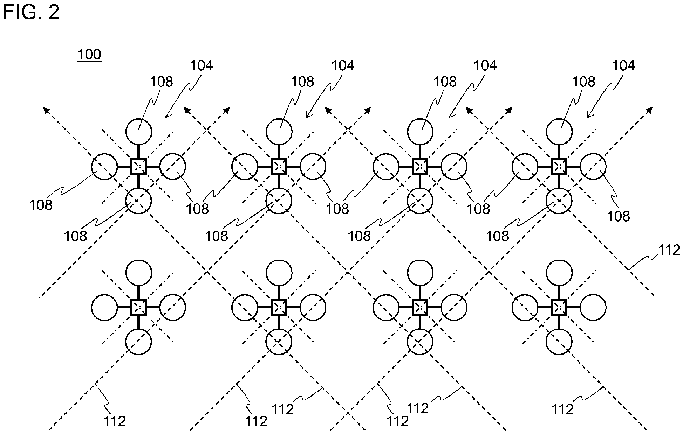

Figur 2 zeigt eine schematische Draufsicht eines zweiten Ausführungsbeispiels der Vorrichtung 100. Während zur Übersichtlichkeit im in Figur 2 gezeigten zweiten Ausführungsbeispiel der Vorrichtung 100 kein Träger 114 gezeigt ist, beispielsweise für freistehende Ladestellen 104, können die Ladestellen 104 auch über einen oder mehrere Träger 114 gelagert und mit einer Stromversorgung verbunden sein. Beispielsweise kann die in der Figur 2 gezeigte obere Reihe der Ladestellen 104 durch einen ersten Träger 114 und die in Figur 2 gezeigte untere Reihe der Ladestellen 104 durch einen zweiten, zum ersten Träger parallelen Träger 114 gelagert und/oder elektrisch angeschlossen sein. Alternativ kann die Gesamtheit der Ladestellen 104 durch einen (zur linken oder rechten Seite der Figur 2 offenen) U-förmigen Träger 114 gelagert und/oder elektrisch angeschlossen sein.

Die einzelnen Sektoren 108 der Ladestellen 104 sind jeweils über geradlinig verlaufende Anfahrtswege 112 zwischen den in einem rechteckigen Raster angeordneten Ladestellen 104 anfahrbar. Die Anfahrtswege 112 sind parallel zu einer der beiden Diagonalen des rechteckigen Rasters, d.h., die Anfahrtswege 112 treffen unabhängig von der Größe des Rasters und bei beliebiger Anzahl an Ladestellen 104 keine der Ladestellen 104.

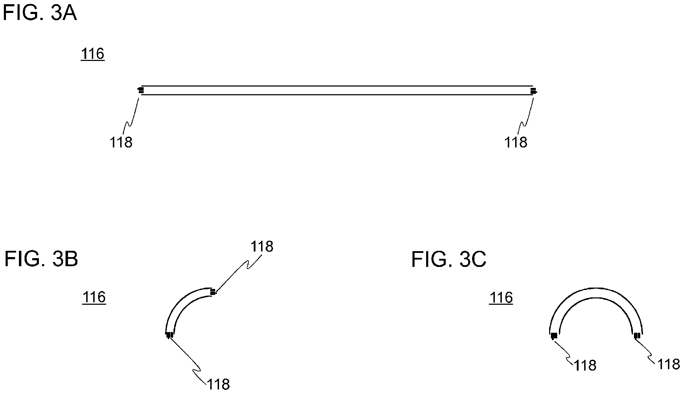

Der Träger 114 kann modular aus Trägermodulen 116 aufgebaut sein. Die Figuren 3A und 3B und 3C zeigen jeweils ein solches Trägermodul 116. Die Trägermodule 116 umfassen gerade (Figur 3A), Kurven-, insbesondere Kreissegmente (Figuren 3B und 3C), sowie optional Weichen und Kreuzungen für bewegliche Ladestellen 104.

Jedes Trägermodul 116 umfasst Leitungen, die bei der Montage der Trägermodule 116 durch Steckverbindungen 118 in elektrischen Kontakt kommen. Dadurch kann ein zusätzlicher Montageaufwand vermieden werden. Insbesondere können Losteile zur Herstellung des elektrischen Kontakts vermieden werden. Über die Leitungen, beispielsweise Stromschienen, sind die Ladestellen 104 mit einer stationären Leistungselektronik verbunden. Die Leistungselektronik stellt den Ladestrom über die Leitungen der Träger 114 und die Auslässe 106 der Ladestelle 104 bereit. Optional umfassen die Leitungen auch Steuerleitungen zur Kommunikation zwischen einem fahrzeugseitigen Batteriemanagementsystem und der Leistungselektronik, beispielsweise zur Regelung des Ladestroms abhängig vom Ladezustand des Fahrzeugs. Ferner umfasst jedes der Trägermodule 116 eine Schiene oder ein Schienenpaar zur längsbeweglichen Lagerung der Ladestelle 104. Beispielsweise umfasst jede Ladestelle 104 eine am Träger hängende Laufkatze, deren Rollen auf den Schienen des Trägers 114 längsbeweglich rollen. Optional sind die Stromschienen und die Schienen zur Lagerung identisch. D.h., die Rollen fungieren als Stromabnehmer.

Durch den Träger 114 ist es möglich, eine gegebene Nutzfläche (beispielsweise einen Betriebshof) mit einer minimalen Anzahl an Stützen des Trägers 114 und einer bedarfsangepassten Anzahl an Ladestellen 104 auszurüsten. Die optionale Beweglichkeit der Ladestellen 104 kann eine bedarfsangepassten Positionierung der Ladestellen 104 ermöglichen. Optional sind die Ladestellen 104 entlang des Trägers 114 beweglich zum Ausgleich unterschiedlicher Fahrzeuglängen und/oder unterschiedlicher Positionen der Ladebuchse am Fahrzeug.

Die Ladestellen 104 können manuell (beispielsweise durch Ziehen oder Schieben der Ladestelle 104 und gegebenenfalls der damit verbundenen Laufkatze) bewegt werden. Alternativ kann die Ladestelle entlang des Trägers elektrisch angetrieben sein. Beispielsweise umfasst die Laufkatze einen ebenfalls über Stromschienen im Träger 114 gespeisten elektrischen Antrieb der Rollen der Laufkatze. Der Antrieb zur Längsbewegung der Ladestellen 104 kann über eine an der Ladestelle 104 (beispielsweise auf Augenhöhe) angeordnete Benutzerschnittstelle steuerbar sein. Alternativ oder ergänzend umfasst die Ladestelle 104 optische Abstandssensoren, auf Ultraschall-basierende Abstandssensoren, eine Stereokamera oder einen Radarsensor zur selbstregelnden Positionierung der Ladestelle 104 bezüglich eines abgestellten oder telemetrisch (beispielsweise über ein Mobilfunknetz) angekündigten Fahrzeugs.

Um eine gegebene Anzahl an Ladestellen 104 der Vorrichtung 100 möglichst flexibel und bedarfsgerecht anzuordnen, ist die Nutzfläche vorzugsweise von einem zusammenhängenden, d.h. durchgehenden (optional in sich geschlossenen) Träger 114 überdeckt. Durch eine Mäanderform und/oder Spiralform des Trägers 114 in der Draufsicht ist die Nutzfläche vollständig oder bis auf zum Laden freibleibende Parkbuchten überdeckbar.

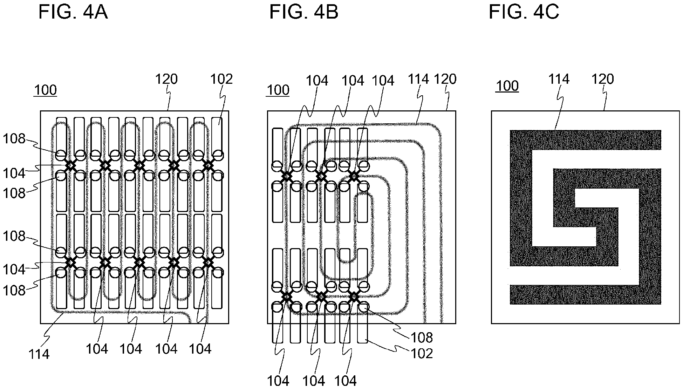

Beispiele zusammenhängender Träger 114 sind in den schematischen Draufsichten der Figuren 4A, 4B und 4C gezeigt. Die gezeigten horizontalen Verläufe des Trägers 114 sind untereinander kombinierbar, beispielsweise indem die Enden der dargestellten Träger 114 miteinander verbunden oder Abschnitte der dargestellten Träger miteinander verbunden werden.

Im in Figur 4A gezeigten Ausführungsbeispiel überdeckt der zusammenhängende Träger 114 eine Nutzfläche 120 mäanderförmig. Zwischen Längsabschnitten des Trägers 114 sind Parkbuchten für die Fahrzeuge 102. In jeder Parkbucht sind mehrere Sektoren 108 der Ladestellen 104, in denen jeweils das Ladekabel der Ladestelle 104 mit dem zu ladenden Fahrzeug verbunden werden kann.

Figur 4B zeigt ein Ausführungsbeispiel der Vorrichtung 100, deren zusammenhängender Träger 114 in der schematischen Draufsicht eine Nutzfläche 120 in der Form einer doppelten Spirale überdeckt. Das heißt, der Träger 114 verläuft von einem ersten Ende (beispielsweise mit geradlinigen Abschnitten) entgegen dem Uhrzeigersinn immer näher auf ein Zentrum der Nutzfläche 120 zu und unterbrechungsfrei von diesem entgegen dem Uhrzeigersinn zu einem zweiten Ende am Rand der Nutzfläche 120. Auch die spiralförmige Gestaltung des Trägers 114 ermöglicht die Anordnung der Ladestellen 104 in parallelen Parkbuchten, wie in Figur 4B schematisch gezeigt.

Figur 4C zeigt in einer schematischen Draufsicht ein Ausführungsbeispiel der Vorrichtung 100, bei dem die Gestaltung des Trägers 114 mäanderförmige und spiralförmige Abschnitte kombiniert. Die Ladestellen 104 entlang des Trägers 114 sind zur besseren Übersichtlichkeit in Figur 4C nicht gezeigt.

Obwohl die Erfindung in Bezug auf exemplarische Ausführungsbeispiele beschrieben worden ist, ist es für einen Fachmann ersichtlich, dass verschiedene Änderungen vorgenommen werden können und Äquivalente als Ersatz einzelner Merkmale verwendet werden können. Ferner können viele Modifikationen vorgenommen werden, um die Vorrichtung gemäß der Lehre der Erfindung an eine bestimmte Anwendung oder eine bestimmte Topographie der Nutzfläche anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Ladevorrichtung
- 102: Elektrofahrzeug
- 104: Ladestelle
- 106: Auslass der Ladestelle
- 108: Sektor der Ladestelle
- 110: Ausrichtungswinkel des Sektors bzw. des Auslasses
- 112: Anfahrtsweg
- 114: Träger
- 116: Trägermodul
- 118: Steckverbindung des Trägermoduls
- 120: Nutzfläche

## Patentansprüche

1. Vorrichtung (100) zum Laden elektrisch antreibbarer Fahrzeuge (102), umfassend:
mehrere Ladestellen (104), die jeweils drei oder vier Auslässe (106) mit jeweils einem Ladekabel zur Bereitstellung eines Ladestroms an ein elektrisch antreibbareres Fahrzeug (102) umfassen, wobei die drei oder vier Auslässe (106) in drei oder vier die Ladestelle (104) umlaufenden Sektoren (108) angeordnet sind und jeder Sektor (108) mit einem Winkel (110) von 30° bis 60°, vorzugsweise 45°, zu einem zwischen mehreren Ladestellen (104) geradlinig verlaufenden Anfahrtsweg (112) ausgerichtet ist; und
mindestens einen zusammenhängenden und sich horizontal erstreckenden Träger (114), wobei die Ladestellen (104) an dem mindestens einen Träger (114) hängend angeordnet sind, und wobei die Ladestellen (104) längsbeweglich an dem mindestens einen Träger (114) angeordnet sind,
**dadurch gekennzeichnet, dass**
der zusammenhängende Träger (114) spiralförmig eine Nutzfläche (120) überdeckt.

2. Vorrichtung nach Anspruch 1, wobei mindestens zwei benachbarte Sektoren (108) jeweils einen gemeinsamen Anfahrtsweg (112) schneiden.

3. Vorrichtung nach Anspruch 1 oder 2, wobei die drei oder vier Auslässe (106) umlaufend gleichverteilt an der Ladestelle angeordnet sind.

4. Vorrichtung nach einem der Ansprüche 1 bis 3, wobei die mehreren Ladestellen (104) in einem rechtwinkligen Raster angeordnet sind, und die zwischen den mehreren Ladestellen (104) geradlinig verlaufenden Anfahrtswege (112) parallel zu Diagonalen des rechtwinkligen Rasters sind.

5. Vorrichtung nach einem der Ansprüche 1 bis 4, wobei der mindestens eine Träger (114) Leitungen zur Stromversorgung der Ladestellen (104) umfasst.

6. Vorrichtung nach einem der Ansprüche 1 bis 5, wobei der mindestens eine Träger (114) modular aus Trägermodulen (116) aufgebaut ist, die jeweils entweder einen geradlinigen Abschnitt oder einen gekrümmten Abschnitt des zusammenhängenden Trägers (114) ausbilden.

7. Vorrichtung nach einem der Ansprüche 1 bis 6, wobei der Träger (114) oberseitig Solarzellen zur Energieversorgung der Ladestellen (104) umfasst.

8. Nutzfläche (120) zum Laden einer Vielzahl elektrisch antreibbarer Fahrzeuge, umfassend:
mehrere Stützen, die in einem Raster auf der Nutzfläche (120) voneinander beabstandet angeordnet sind;
mindestens einen zusammenhängenden, sich horizontal erstreckenden Träger (114), der auf den Stützen aufliegt und an dem mehrere Ladestellen (104) hängend angeordnet sind, die jeweils drei oder viere Auslässe (106) mit jeweils einem Ladekabel zur Bereitstellung eines Ladestroms an ein elektrisch antreibbares Fahrzeug umfassen, wobei die drei oder vier Auslässe (106) in drei oder vier die Ladestelle umlaufenden Sektoren angeordnet sind und jeder Sektor mit einem Winkel (110) von 30° bis 60°, vorzugsweise 45°, zu einem zwischen mehreren Stützen geradlinig verlaufenden Anfahrtsweg ausgerichtet ist, und wobei die Ladestellen (104) längsbeweglich an dem mindestens einen Träger (114) angeordnet sind,
**dadurch gekennzeichnet, dass**
der zusammenhängende Träger (114) spiralförmig die Nutzfläche (120) überdeckt.

## Claims

1. Apparatus (100) for charging electrically driveable vehicles (102), comprising:
a plurality of charging points (104) which each comprise three or four outlets (106) each with a charging cable for providing a charging current to an electrically driveable vehicle (102), wherein the three or four outlets (106) are arranged in three or four sectors (108) which encircle the charging point (104) and each sector (108) is oriented at an angle (110) of from 30° to 60°, preferably 45°, in relation to an approach route (112) which runs in a straight line between a plurality of charging points (104); and
at least one continuous and horizontally extending carrier (114), wherein the charging points (104) are arranged suspended from the at least one carrier (114), and wherein the charging points (104) are arranged in a longitudinally movable manner on the at least one carrier (114),
**characterized in that**
the continuous carrier (114) covers a useful area (120) in a spiral manner.

2. The apparatus according to Claim 1, wherein at least two adjacent sectors (108) each intersect a common approach route (112).

3. The apparatus according to Claim 1 or 2, wherein the three or four outlets (106) are arranged in an encircling and uniformly distributed manner on the charging point.

4. The apparatus according to one of Claims 1 to 3, wherein the plurality of charging points (104) are arranged in a rectangular grid, and the approach routes (112) which run in a straight line between the plurality of charging points (104) are parallel to diagonals of the rectangular grid.

5. The apparatus according to one of Claims 1 to 4, wherein the at least one carrier (114) comprises lines for supplying power to the charging points (104).

6. The apparatus according to one of Claims 1 to 5, wherein the at least one carrier (114) is constructed in a modular manner from carrier modules (116) which each form either a straight-line section or a curved section of the continuous carrier (114).

7. The apparatus according to one of Claims 1 to 6, wherein the carrier (114), on the top side, comprises solar cells for supplying energy to the charging points (104) .

8. A useful area (120) for charging a large number of electrically driveable vehicles, comprising:
a plurality of supports which are arranged at a distance from one another in a grid on the useful area (120) ;
at least one continuous, horizontally extending carrier (114) which is supported on the supports and from which a plurality of charging points (104) are arranged in a suspended manner, which charging points each comprise three or four outlets (106) each with a charging cable for providing a charging current to an electrically driveable vehicle, wherein the three or four outlets (106) are arranged in three or four sectors which encircle the charging point and each sector is oriented at an angle (110) of from 30° to 60°, preferably 45°, in relation to an approach route which runs in a straight line between a plurality of supports, and wherein the charging points (104) are arranged in a longitudinally movable manner on the at least one carrier (114), **characterized in that**
the continuous carrier (114) covers the useful area (120) in a spiral manner.

## Revendications

1. Dispositif (100) permettant de charger des véhicules à propulsion électrique (102), comprenant :
plusieurs points de chargement (104) qui comprennent respectivement trois ou quatre sorties (106) dotées chacune d'un câble de chargement pour fournir un courant de charge à un véhicule à propulsion électrique (102), les trois ou quatre sorties (106) étant disposées dans trois ou quatre secteurs (108) au tour du point de chargement (104) et chaque secteur (108) étant orienté selon un angle (110) de 30° à 60°, de préférence de 45°, par rapport à une voie d'accès (112) s'étendant en ligne droite entre plusieurs points de chargement (104) ; et
au moins un support (114) continu et s'étendant horizontalement, les points de chargement (104) étant disposés suspendus sur ledit au moins un support (114), et les points de chargement (104) étant disposés de manière mobile dans le sens de la longueur sur ledit au moins un support (114),
**caractérisé en ce que** le support continu (114) recouvre en spirale une surface utile (120).

2. Dispositif selon la revendication 1, dans lequel au moins deux secteurs voisins (108) croisent respectivement une voie d'accès (112) commune.

3. Dispositif selon la revendication 1 ou 2, dans lequel les trois ou quatre sorties (106) sont disposées au point de chargement en étant réparties de manière égale sur la périphérie.

4. Dispositif selon l'une quelconque des revendications 1 à 3, dans lequel les plusieurs points de chargement (104) sont disposés selon une grille rectangulaire, et les voies d'accès (112) s'étendant en ligne droite entre les plusieurs points de chargement (104) sont parallèles à la diagonale de la grille rectangulaire.

5. Dispositif selon l'une quelconque des revendications 1 à 4, dans lequel ledit au moins un support (114) comprend des lignes pour l'alimentation électrique des points de chargement (104).

6. Dispositif selon l'une quelconque des revendications 1 à 5, dans lequel ledit au moins un support (114) est composé de manière modulaire à partir de modules de support (116) qui réalisent respectivement soit une partie rectiligne, soit une partie courbe du support continu (114).

7. Dispositif selon l'une quelconque des revendications 1 à 6, dans lequel le support (114) comprend côté supérieur des cellules solaires pour l'alimentation en énergie des points de chargement (104).

8. Surface utile (120) destinée au chargement d'une pluralité de véhicules à propulsion électrique, comprenant :
plusieurs poteaux qui sont disposés sur la surface utile (120) à distance les uns des autres selon une grille ;
au moins un support continu (114) s'étendant horizontalement et qui repose sur les poteaux et sur lequel plusieurs points de chargement (104) sont disposés suspendus qui comprennent respectivement trois ou quatre sorties (106) dotées chacune d'un câble de chargement pour fournir un courant de charge au véhicule à propulsion électrique, les trois ou quatre sorties (106) étant disposées dans trois ou quatre secteurs entourant le point de chargement et chaque secteur est orienté selon un angle (110) de 30° à 60°, de préférence de 45°, par rapport à une voie d'accès s'étendant en ligne droite entre plusieurs poteaux, et les points de chargement (104) étant disposés mobiles dans le sens de la longueur sur ledit au moins un support (114),
**caractérisé en ce que** le support continu (114) recouvre en spirale la surface utile (120).
